(19) **Europäisches Patentamt / European Patent Office / Office européen des brevets**

(11) **EP 1 887 674 A1**

(12) # EUROPEAN PATENT APPLICATION
published in accordance with Art. 153(4) EPC

(43) Date of publication:
**13.02.2008 Bulletin 2008/07**

(51) Int Cl.:
*H02J 3/01* (2006.01)   *H02J 3/18* (2006.01)
*H02J 3/24* (2006.01)

(21) Application number: **06743500.8**

(22) Date of filing: **17.05.2006**

(86) International application number:
**PCT/ES2006/070062**

(87) International publication number:
**WO 2006/123006 (23.11.2006 Gazette 2006/47)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.05.2005 ES 200501224**

(71) Applicant: **Endesa Generacion, S.A.**
**41004 Sevilla (ES)**

(72) Inventors:
 • **ALONSO RODRIGUEZ, Angel Matías**
  **E-41004 Sevilla (ES)**
 • **FERNANDEZ BEITES, Luis**
  **E-41004 Sevilla (ES)**
 • **RAMIREZ PRIETO, Dionisio**
  **E-41004 Sevilla (ES)**
 • **SABUGAL GARCIA, Santiago**
  **E-41004 Sevilla (ES)**
 • **BALLESTEROS APARICIO, Juan Carlos**
  **E-41004 Sevilla (ES)**
 • **BURGOS RODRIGUEZ, Silvia**
  **E-41004 Sevilla (ES)**

(74) Representative: **Pons Arino, Angel et al**
**Pons Patentes y Marcas Internacional, S.L.**
**Glorieta Ruben Dario 4**
**28010 Madrid (ES)**

(54) **DISTRIBUTED GENERATION SYSTEM WITH IMPROVED NETWORK POWER QUALITY**

(57)    A distributed generation system with improved electrical network power quality, of the type which supplies electrical power in a distributed model, and which can inject and absorb active and reactive power at the network by means of filters and power transformers, so as to compensate for different disturbances; it being comprised of a direct current generator, a direct current-direct current converter; a means for storing power with a high response speed connected in parallel; and a direct current-alternating current inverter which generates three-phase alternating current from the power supplied by the generator. The voltage of the inverter is controlled by means of a vectorial control which continuously samples the parameters of the network in order to adjust, with a high response speed, the amounts of active and reactive power which the system must exchange with the electrical network in order to eliminate or reduce these disturbances.

FIG. 2

EP 1 887 674 A1

**Description**

## TECHNICAL FIELD OF THE INVENTION

This invention relates to a distributed generation system with improved electrical network power quality.

## BACKGROUND OF THE INVENTION

Operation of apparatus which uses electrical power is optimal when the electrical supply has voltage and frequency values very close to the assigned (nominal) values of said apparatus and, furthermore, when the voltage wave is practically a sine wave (no harmonics). It is also necessary that the voltage drops should be most infrequent, as these interruptions are detrimental for the users; this damage is occasionally purely psychological, but frequently translates to significant economic losses, as it affects production in industrial processes.

Different disturbances occur in electrical networks; these modify the ideal conditions for electrical supply, more or less seriously affecting the quality of the electrical service provided to users.

The disturbances which occur most frequently in electrical networks and which bring about a reduction in the electrical power quality provided to the consumers are:

1. Voltage drops.
2. Harmonics.
3. Voltage fluctuations.
4. Voltage dips.
5. Voltage collapse.
6. Variations in frequency (increase and decrease).
7. Loss of generators due to temporary instability.

The system which is the object of this invention, in addition to generating electrical power, is able to eliminate the aforementioned disturbances.

In order to eliminate the first type of disturbance in the list above -voltage drops- there is no practical implementation in the invention, as Uninterruptible Power Supply (UPS) systems which eliminate the same are known. Likewise, neither is the implementation devoted to the compensation of disturbance no. 2 -harmonics- included, for whose elimination other technological means exist, such as filters (passive and active), harmonic injection, etc.

On the other hand, disturbance no. 7 -loss of generators- is not in itself an evident disturbance, but it may give rise to variations in frequency and/or voltage if the electrical system does not have the capability of reacting quickly to the loss of a generator.

These disturbances have the following effects:

- Voltage fluctuations: Voltage fluctuations cause variations in the flow of light emitted by lamps, which causes the so-called "flicker". This effect is defined as the impression of instability of the visual sensation, due to a luminous stimulus whose brightness or spectral distribution fluctuates in time. This effect brings about an increase in fatigue in persons, their sensitivity being at its greatest for voltage fluctuations whose frequencies are in the range of 8 to 10 Hz.

- Voltage dips: The severe reduction in voltage during a voltage dip causes the speed of asynchronous motors to drop due to the reduction in torque and, the disturbance having finished, the motors re-accelerate, consuming a great quantity of current, which may trigger the disconnection of the installation affected.

- Voltage collapse: Voltage collapse consists of a permanent drop in voltage in a part of the electrical system which suffers a temporary drop in voltage, when in this area there are consumers who have a constant power characteristic. This characteristic causes any temporary drop in voltage to increase and to be maintained, due to the increase in the current absorbed by the load.

- Variations in frequency: Variations in frequency have a particular influence on the operation of electrical motors, in which it causes a corresponding variation in the power absorbed. The importance of the variation in power depends on the mechanical characteristic of the machine powered, $M = f(\Omega)$, this affectation being defined by the influence factor

$$fi = \frac{dp/p}{df/f}, \text{ greatest for the operation of centrifugal pumps and fans.}$$

- Loss of generators due to temporary instability. In the event of a loss of charge of a generator due to a defect in an auto-reclosing line, the acceleration of the generator during the reclosing time may be such as to make disconnection mandatory subsequent to re-connection of the line.

## DESCRIPTION OF THE INVENTION

The distributed generation system of this invention is constituted in such a way that in addition to generating electrical power, it is optimal for compensating the disturbances described above.

In accordance with the invention, the system comprises a direct current generator (for example, a fuel cell) or an alternating current generator, whose output is adapted by means of a DC/DC converter (or AC/DC if it is an AC generator) and is in parallel with a means for storing power with a high response speed (ultracondenser, battery, superconductor coil, etc.). The voltage at the common or connection point of both aforementioned elements is converted into alternating current by means of an inverter (DC-AC converter), the voltage being regulated by means of a vectorial control system which continuously samples the parameters of the network and which allows the adjustment, with a high response speed, of the active and reactive power values which the system supplies to the network, via a filter and a transformer, in order to compensate the disturbances detected.

## BRIEF DESCRIPTION OF THE DRAWINGS

Figure 1 portrays the general diagram of the system of this invention.
Figures 2, 3 and 4 portray the simplified internal implementation of the vectorial control of the inverter of the system of this invention, in order to detect and compensate for different types of disturbances.

## DESCRIPTION OF AN EMBODIMENT OF THE INVENTION

The system 1 of the invention is a system for the generation of alternating current, typically usable in a distributed generation model, and which allows the aforementioned different disturbances to be compensated by independently controlling the active and reactive power values which it exchanges with the network by means of an inverter.

It comprises, in a non-limitative example of the invention, a fuel cell 2 as the power generating element in a distributed generation system which, together with the storage means 4 with a high response speed, forms an assembly which is capable of supplying or absorbing the quantities of active and reactive power required for the compensation of the disturbances.

To do this, its output is adapted by means of a DC/DC converter 3 connected in parallel with the electrical power storage means 4 with a high response speed, and may consist, for example, of an ultracondenser, a battery, a superconductor coil, etc.

The voltage at the common point of 3 and 4 is converted into alternating current by means of an inverter 5, its voltage regulated by means of a vectorial control 7 which continuously samples the parameters of the network 9, fundamentally the voltage and the frequency.

In this way, the system can vary most rapidly the active and reactive power supplied to the network via a filter 6 and a transformer 8, in order to compensate the disturbances detected.

With the space phasors of the voltage and intensity, the expressions of the active and reactive power injected into the network give

$$P = \frac{2}{3} U_d \cdot I_d \quad \text{y} \quad Q = \frac{2}{3} U_d \cdot I_q,$$

$U_d$ being the component of the space phasor U on the "d" axis, $I_d$ being the component of the space phasor I on the "d" axis and $I_q$ being the component of the space phasor I on the "q" axis.

When the network voltage and frequency values diverge from their setpoints, the inverter control 7 first develops the setpoints corresponding to $I_d$ and $I_q$ via the PI regulators whose constants are adjusted in accordance with the characteristics of the network. In a second stage, by means of other likewise PI regulators, the d and q components of the space phasor of the voltage to be generated by the inverter 5 are determined, bearing in mind the d and q components of the network voltage phasor and the R and L characteristics of the filter 6 and the transformer 8 located between the inverter and the network, in accordance with the equations:

$$U_{convd} = U_d + R \cdot I_d + L \cdot \frac{dI_d}{dt} - \omega \cdot L \cdot I_q \; ; \quad U_{convq} = U_q + R \cdot I_q + L \cdot \frac{dI_q}{dt} - \omega \cdot L \cdot I_d$$

Regulation at the "d" axis controls the active power exchanged between the system and the electrical network via the inverter 5, the filter 6 and the transformer 8 and, by means of this exchange, the frequency of the network is maintained at the setpoint value.

Control of the reactive power exchange between the system and the electrical network is carried out at the "q" axis via the same components 5, 6 and 8, and by means of this exchange, the voltage of the network is maintained at the setpoint.

The control 7 is implemented preferably via a Digital Signal Processor (DSP).

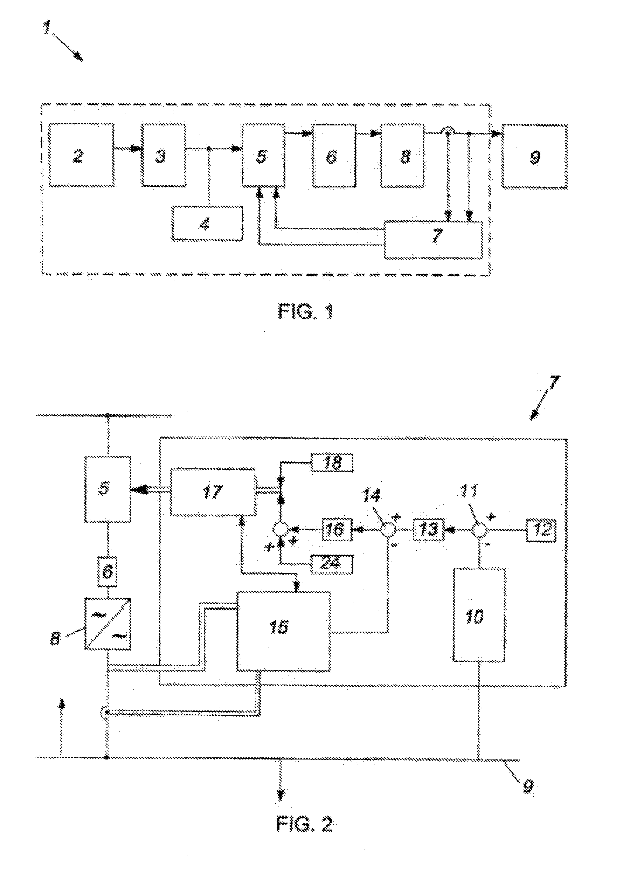

In order to compensate the voltage disturbances designated as voltage fluctuations, voltage dips and voltage collapse it is necessary to supply reactive power and to do so with a high response speed. The control 7 must calculate continuously the reactive power to be provided to or absorbed from the network. In order to do this, it adopts the structure portrayed in Figure 2.

The value of the network voltage is variable, which makes it necessary to obtain a continuous measurement of its magnitude, as this is the variable to be controlled. The control 7 therefore implements an operating circuit 10 which carries out a measurement of the voltage module of the three-phase network in each program cycle instead of doing so each time an instantaneous maximum value is reached, in order to obtain in this way a greater degree of control and response speed.

In each program cycle the circuit 10 calculates the voltage of the network in static coordinates Ux and Uy. By means of this procedure, the value of the voltage of the network may be obtained with a frequency 50-100 times greater than that obtained when only the instantaneous maximum value is measured, depending on the extent of the control program and therefore its working cycle. Subsequently, a comparator 11 compares this value with the network voltage reference 12, generating an error signal which is transformed by a proportional-integral (PI) regulator 13 into a reactive power reference by means of its equivalent in terms of $i_q{}^*$ quadrature voltage, which another comparator 14 compares with its value measured by the corresponding operating circuit 15, implementing at the output of this second comparator 14 another PI regulator 16 which provides the voltage reference at the Usq* quadrature axis, in order to inject into the network the reactive power necessary via the inverter, operated by a space vector modulator 17.

On the other hand, as the effects of the actions carried out on the direct and quadrature axes are not completely independent, an operating circuit 18 must be inserted in order to uncouple them. In this case, the effect of the quadrature axis on the direct axis is uncoupled by means of the term $-\omega.L./_q$ applied to the reference voltage at axis d, Usd*. At axis d, a control loop is not implemented, due to an additional active power control not being necessary.

The control system for the three voltage disturbances considered is basically the same, naturally changing the constants of regulators 13 and 16.

In order to compensate for simultaneous variations in frequency and voltage, the vectorial control 7 must obtain the active power values which must be exchanged between the system and the network to regulate the variations in frequency, and as it is considered that these disturbances are accompanied by variations in voltage, as these disturbances are usually caused by the presence in the network of fluctuating loads which require variable active and reactive power, they must also obtain reactive power values in order to compensate for the variations in voltage.

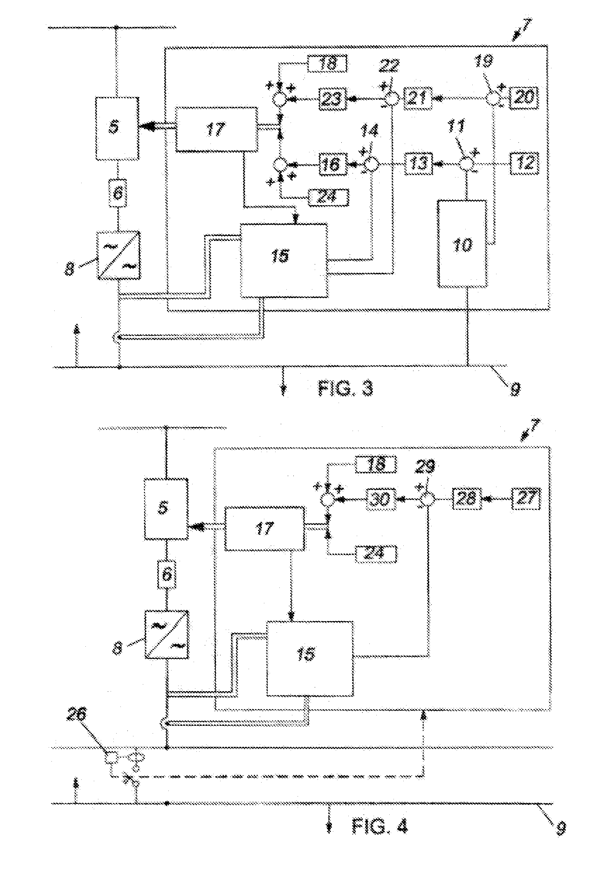

To do this, a control has been designed which adapts itself well to the temporary regimes of the processes which occur in electrical systems. Its configuration is portrayed in Figure 3. Detection of the variations in frequency is carried out by means of the implementation of a comparator 19 which compares the measurement in the network with the frequency setpoint 20. The comparison error is sent to a PI regulator 21 which generates a setpoint of a magnitude equal to the current component in the direct axis *Id,* (proportional to the active power) necessary in order to reduce the error. The innermost loop compares the value of the setpoint id* by means of another comparator 22, with the real value in the network measured by the operating circuit 15, and the comparison error is taken to a second PI regulator 23. The signal obtained from this second regulator establishes the voltage reference at the direct axis, Usd*.

Compensation for variations in voltage is carried out in the same way as the previous case (Figure 2), by means of an operating circuit 10 which obtains the voltage module of the three-phase network, which is compared in the comparator 11 with the network voltage reference 12, generating an error signal which the PI regulator 13 transforms into a reactive power reference by means of its equivalent in terms of quadrature current $I^*{}_q$. Subsequently, comparing this value in the comparator 14 with its corresponding feedback, iq obtained by means of the circuit 15, the resulting value accesses the second PI regulator 16 which provides the reference voltage at the quadrature axis, Usq*, to inject the necessary reactive power into the network.

As the effects of the actions carried out on the direct and quadrature axes are not completely independent, in order to uncouple them the operating circuit 18 is implemented; this inserts the term $-\omega.L./_q$ applied to the reference voltage at axis d, Usd*; and the operating circuit 24 which inserts the term $\omega.L./_d$ applied to the voltage reference at axis q, Usq*, connecting the output to the space vector modulator 17.

Improvement of temporary generator stability is carried out by the system by absorbing a particular active power during a given time period when a loss of power supplied by the generator due to a fault in the line 9 occurs. The vectorial control determines the active power to be absorbed by the system in order to limit the acceleration of the generator 25. The advantage of vectorial control consists of its adapting itself well to the temporary regimes of the processes which occur in electrical systems. The signal which causes the system to intervene is the disconnection of the automatic switch 26 due to the action of the protection devices. The setpoint 27 of the active power which the fuel cell system must absorb is transformed into a reference of the current at the direct axis id* by means of an operating circuit 28 whose output is connected to a comparator 29 which compares it with the real intensity id in the network, measured by the operating circuit 15, and the comparison error is taken to the PI regulator 30. The signal obtained at this regulator establishes the reference voltage on the direct axis, Usd*.

Also, as the effects of the actions carried out on the direct and quadrature axes are not completely independent, a term must be inserted in order to uncouple them via the operating circuit 24; this uncouples the effect of the direct axis on the quadrature axis by means of the term $\omega.L.I_d$ applied to the reference voltage at axis q, Usq*. As in the previous cases, the output connects to the space vector modulator 17, which is what acts on the inverter 5.

The nature of this invention having been sufficiently disclosed, likewise the practical embodiment of the same, let it be known that the dispositions mentioned above and portrayed in the attached drawings are subject to variations in detail in so far as they do not alter its fundamental principle.

**Claims**

1. A distributed generation system with improved electrical network power quality, of the type which supplies electrical power in a distributed model, and which can inject and absorb active and reactive power at the network via filters and power transformers in order to compensate for different disturbances which affect the electrical power quality, **characterised in that** it comprises a direct current generator; a direct current to direct current converter; a means for storing power with a high response speed connected in parallel; and a direct current to alternating current inverter which generates three-phase alternating current from the power supplied by the generator; the voltage of the inverter being regulated by means of a vectorial control which continuously samples the parameters of the network in order to adjust, with a high response speed, the amounts of active and reactive power which the system must exchange with the electrical network in order to eliminate or reduce the disturbances.

2. A system according to claim 1, **characterised in that** the vectorial control features means for the identification and measurement of disturbances in the electrical network known as voltage fluctuations, voltage dips and voltage collapse, and for acting on the inverter in order to inject reactive power into the network in the amount necessary for the disturbances to be eliminated.

3. A system according to claim 1, **characterised in that** the vectorial control features means for the identification and measurement of disturbances in the electrical network known as variations in frequency, with possible simultaneous variations in the voltage, and for acting on the inverter in order to exchange active and reactive power with the network in the amount necessary for said disturbances to be eliminated.

4. - A system according to claim 1, **characterised in that** the vectorial control features means for the identification and measurement of the disturbance in the electrical network known as temporary instability of an electrical generator, and for acting on the inverter in order to absorb a certain amount of active power during a certain time period, in such a way that the generator may be connected to the network once the fault in the line has been eliminated.

5. A system according to claim 2, **characterised in that** the means implemented in the vectorial control for the identification and measurement of the disturbances known as voltage fluctuations, voltage dips and voltage collapse consists of an operating circuit which obtains the three-phase network voltage module in very short time periods; a comparator for comparing said voltage with a three-phase voltage setpoint or reference; a PI regulator for the obtaining of the reference quadrature current; an operating circuit which measures the value of the quadrature current in the network; a comparator of the quadrature current reference with its measured value; another PI regulator for obtaining the voltage value at the quadrature axis equivalent to the reactive power to be injected; an uncoupling operating circuit to cancel the cross-effect on the injection of active power, and a space vector modulator which acts on the inverter.

6. A system according to claim 3, **characterised in that** the means implemented in the vectorial control for the identification and measurement of the disturbances known as variations in frequency, with possible simultaneous variations in the voltage, consists of a means for the identification and measurement of variations in frequency, constituted of a comparator of the frequency of the network with a frequency setpoint or reference, a PI regulator for the obtaining of the value of the current at the direct axis equivalent to the active power which it is necessary to exchange in order to reduce the error, an operating circuit which measures the values of the direct and quadrature currents in the network, a comparator of the direct current obtained at the output of the PI regulator with the direct current measured, a second PI regulator for obtaining the value of the voltage at the direct axis equivalent to the active power to be exchanged with the network and an uncoupling operating circuit to cancel the cross-effect on the injection of reactive power, and a means for the identification and measurement of the variations in voltage comprised of an operating circuit which obtains the three-phase network voltage module in very short time periods, a comparator of said voltage with a three-phase voltage setpoint or reference, a PI regulator for obtaining the reference quadrature current, a comparator of the reference quadrature current with its value measured in the network, another PI regulator for obtaining the value of the voltage at the quadrature axis equivalent to the reactive power to be injected and an uncoupling operating circuit to cancel the cross-effect on the injection of active power, both means acting on a space vector modulator which in turn acts on the inverter.

7. A system according to claim 4, **characterised in that** the means for the identification and measurement of the electrical network disturbance known as temporary instability of an electrical generator consists of an operating circuit which obtains the intensity corresponding to a predetermined amount of active power to be absorbed in the event of this anomaly occurring; an operating circuit which measures the direct intensity value in the network; a comparator of the intensity obtained with the intensity measured in the network; a PI regulator which obtains the voltage at the direct axis corresponding to the power to be absorbed; and an uncoupling operator to cancel the cross-effect on the injection of reactive power, associated with a signal which activates the intervention of the system and which originates in the disconnection of the automatic switch due to the action of the protection devices, acting on the inverter via a space vector modulator.

8. A system according to previous claims, **characterised in that** the vectorial control is implemented preferably by a digital signal processor.

9. A system according to claim 1, **characterised in that** the generator consists preferably of a fuel cell.

10. A system according to claim 1, **characterised in that** the direct current generation equipment is constituted of an alternating current generator, whose output is adapted by means of an alternating current-direct current converter which replaces the direct current-direct current converter.

FIG. 1

FIG. 2

FIG. 3

FIG. 4

## INTERNATIONAL SEARCH REPORT

| | |
|---|---|
| International application No. | |
| PCT/ ES 2006/070062 | |

### A. CLASSIFICATION OF SUBJECT MATTER

see extra sheet

According to International Patent Classification (IPC) or to both national classification and IPC

### B. FIELDS SEARCHED

Minimum documentation searched (classification system followed by classification symbols)
H02J

Documentation searched other than minimum documentation to the extent that such documents are included in the fields searched

Electronic data base consulted during the international search (name of data base and, where practicable, search terms used)

CIBEPAT,EPODOC

### C. DOCUMENTS CONSIDERED TO BE RELEVANT

| Category* | Citation of document, with indication, where appropriate, of the relevant passages | Relevant to claim No. |
|---|---|---|
| X<br>A | US 5329222 A (GYUGYI LASZLO ; SCHAUDER COLIN D ; EDWARDS CHARLES W ;) 12.07.1994, column 3, line 42- column 4, line 20; column 4, line 45- column 10, line 24. | 1-4,9,10<br>5-8 |
| X<br>A | EP 0473256 A2 (GEN ELECTRIC) 04.03.1992, column 2, line 49- column 7, line 35; figures 1 and 2. | 1-4,9,10<br>5-8 |
| X<br>A | JP 2003102130 A (TOHOKU ELECTRIC POWER CO; HITACHI LTD) 04.04.2003, the whole document. | 1-4,9,10<br>5-8 |

☐ Further documents are listed in the continuation of Box C.     ☒ See patent family annex.

| | |
|---|---|
| * Special categories of cited documents:<br>"A" document defining the general state of the art which is not considered to be of particular relevance.<br>"E" earlier document but published on or after the international filing date<br>"L" document which may throw doubts on priority claim(s) or which is cited to establish the publication date of another citation or other special reason (as specified)<br>"O" document referring to an oral disclosure use, exhibition, or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other documents , such combination being obvious to a person skilled in the art<br>"&" document member of the same patent family |

| Date of the actual completion of the international search | Date of mailing of the international search report |
|---|---|
| 24 Agosto 2006  (24-08-2006) | (31-08-2006) |

| Name and mailing address of the ISA/<br>O.E.P.M.<br><br>Paseo de la Castellana, 75 28071 Madrid, España.<br>Facsimile No.   34 91 3495304 | Authorized officer<br>L. García Aparicio<br><br>Telephone No. + 34 91 349 30 57 |

Form PCT/ISA/210 (second sheet) (April 2005)

## INTERNATIONAL SEARCH REPORT

Information on patent family members

| International application No. |
| --- |
| PCT/ ES 2006/070062 |

| Patent document cited in the search report | Publication date | Patent family member(s) | Publication date |
| --- | --- | --- | --- |
| US5329222A A | 12.07.1994 | NONE | ------------ |
| EP 0473256 A | 04.03.1992 | US 5041959 A<br>EP 19910305367<br>JP 4229023 A<br>JP 3133386 B<br>DE 69116955 D<br>DE 69116955 T | 20.08.1991<br>13.06.1991<br>18.08.1992<br>05.02.2001<br>21.03.1996<br>26.09.1996 |
| JP 2003102130 A | 04.04.2003 | JP 3744831 B | 15.02.2006<br>15.02.2006<br>15.02.2006 |

Form PCT/ISA/210 (patent family annex) (April 2005)

INTERNATIONAL SEARCH REPORT

International application No.

PCT/ ES 2006/070062

CLASSIFICATION OF SUBJECT MATTER

*H02J 3/01* (2006.01)
*H02J 3/18* (2006.01)
*H02J 3/24* (2006.01)

Form PCT/ISA/210 (extra sheeet) (April 2005)